# EUROPÄISCHE PATENTANMELDUNG

(11) **EP 4 756 213 A1**
(43) Veröffentlichungstag der Anmeldung: **10.06.2026**
(21) Anmeldenummer: 25175725.8
(22) Anmeldetag: 12.05.2025
(51) Int. Cl.: F03D 1/02, F03D 3/02, F03D 13/20

(54) **AUFGELÖSTE TRAGSTRUKTUR FÜR EINE WINDENERGIEANLAGE**

(71) Anmelder: Richert, Frank, 31535 Neustadt am Rübenberge (DE)
(72) Erfinder: Richert, Frank, 31535 Neustadt am Rübenberge (DE)

(57) **Zusammenfassung**

Die Erfindung betrifft eine aufgelöste, x-förmig aufgebaute Tragstruktur zur Aufnahme mehrerer Windgeneratoren. Zwei sich kreuzende Rotor-Tragarme, an dessen einem Ende mindestens ein Rotor sitzt, sind an ihrem Schnittpunkt über ein horizontales Drehgelenk schwenkbar gelagert. Die Drehachse ist über eine separate Stützkonstruktion gehalten, welche fest mit einer drehbaren Basisstruktur verbunden ist. Zwischen den freien Enden der Rotor-Tragarme und der Basisstruktur ist jeweils ein elastisches Verbindungssystem angeordnet. Dieses System ermöglicht die Feinjustierung der Rotorpositionen zueinander, weist elastische Eigenschaften zur Schwingungsdämpfung auf und kann zur Freigabe eines Schwenkvorgangs gelöst werden, um die Rotor-Tragarme durch Seilwinden abzusenken. Die modulare Tragstruktur erlaubt verschiedene Geometrien und Materialien und ist insbesondere für kleine bis mittelgroße Anlagen geeignet, auch zur Montage auf Gebäuden oder Containern. Die Erfindung verbessert Wirtschaftlichkeit, Wartungsfreundlichkeit und strukturelle Entkopplung der Windenergieanlage.

## Beschreibung

Die Erfindung betrifft eine aufgelöste Tragstruktur zur Aufnahme mehrerer Rotoren zur Umwandlung von Windenergie z.B. in elektrische Energie.

### Stand der Technik

Konventionelle WEA setzen üblicherweise einen einzelnen großen Rotor ein, der über eine horizontale Drehachse verfügt und auf einem starren Turm montiert ist. Die Windrichtungsnachführung erfolgt durch eine Drehverbindung am Turmkopf. Um die höheren Windgeschwindigkeiten in größere Höhe auszunutzen, werden hohe Turmkonzepte realisiert. Bei steigender Turmhöhe erhöhen sich jedoch die strukturellen Anforderungen an Turmfuß, Fundament und Turmwandstärke überproportional, was zu stark zunehmenden Kosten und erhöhtem Materialeinsatz führt. Zudem treten verstärkt Schwingungen und Resonanzeffekte zwischen Rotor und Turm auf, die die Lebensdauer der Anlage begrenzen.

Zur Minderung dieser Probleme werden u.a. Multirotor-Konzepte untersucht, bei denen mehrere kleinere Rotoren an einer ausgedehnten Tragstruktur angeordnet sind. Hierdurch kann die Rotorfläche auf verschiedene Untereinheiten verteilt werden, was zu einer geringeren Belastung einzelner Komponenten führt. Die Gesamtleistung der Multi-Rotor WEA kann durch die Anzahl der gleichen Rotoren verändert werden. Durch die hohe Anzahl von gleichen Bauteilen können die Investitions- und Betriebskosten verringert werden. Bisher realisierte Prototypen und Studien, beispielsweise von Vestas, Aerodyn oder Mingyang, demonstrieren bereits die prinzipielle Machbarkeit von Multi-Rotoren WEA, zeigen aber hinsichtlich der Tragstruktur starke Anlehnung an konventionelle Turmstrukturen mit den damit verbunden Eigenschaften auf, die z.B. zu kostenintensiven Installations- und Betriebskosten führen.

Aus der Druckschrift GB2443886 ist eine Multi-Rotor Windenergieanlage bekannt, bei der die Rotoren an einen schwenkbaren Querträger befestigt sind, der in einer im Wesentlichen vertikalen Ebene gedreht werden kann, um eine der beiden Rotor/Gondel-Einheiten in die Nähe des Turmfußes zu bringen.

Aus der Druckschrift EP0761964A1 ist eine Windenergieanlage mit 2 Rotoren bekannt die durch Arme in V-Anordnung getragen werden. Die Arme sind an einer Basis angelenkt, die um eine vertikale Säule auf Rollen schwenkbar ist. Die Arme werden normalerweise durch eine Zugstange und eine Strebe in der V-Position gehalten, können aber zur Wartung der Rotoren abgesenkt werden.

Bekannt sind aus Druckschriften US11994108B2, WO2019042515A1 und US7692322 Verfahren, Systemschwingungen in Richtung der Rotordrehachsen (fore-aft vibrations) oder Torsionsschwingungen durch gezielte Ansteuerung der Blattverstellung der einzelnen Rotoren positiv zu beeinflussen.

### Aufgabe der Erfindung

Die der Erfindung zugrunde liegende technische Aufgabe besteht darin, eine Tragstruktur für eine Multi-Rotoren Windenergieanlage bereitzustellen, die gegenüber konventionellen Einzelrotoranlagen eine gesteigerte Wirtschaftlichkeit, reduzierte strukturelle Anforderungen, verbesserte Wartungsfreundlichkeit und eine höhere Betriebssicherheit aufweist. Insbesondere soll durch die neuartige Tragstruktur eine effektive Kraftverteilung, eine gezielte Schwingungsdämpfung sowie eine einfache Möglichkeit zum Absenken der Rotoren zur Wartung oder bei extremen Wetterbedingungen realisiert werden. Gleichzeitig soll eine Anpassung der Anlage an unterschiedliche Einsatzorte, insbesondere auch auf bestehenden Infrastrukturen wie Gebäudedächern oder Containern, ermöglicht werden.

### Lösung der Aufgabe

Die Erfindung offenbart eine Windenergieanlage mit einer aufgelösten, x-förmig angeordneten Tragstruktur, welche zwei Rotor-Tragarme umfasst, an dessen jeweiligen einem Ende mindestens ein Rotor sitzt, die sich in einem gemeinsamen Drehpunkt kreuzen. In diesem Kreuzungspunkt ist ein Drehgelenk angeordnet, das ein Schwenken der Arme um eine horizontale Achse ermöglicht. Die Drehachse wird über eine fest mit der drehbaren Basisstruktur verbundenen Stützkonstruktion gehalten.

Zwischen den freien Enden der Rotor-Tragarme und der Basisstruktur ist jeweils ein elastisches Verbindungssystem vorgesehen, das mehrere Funktionen übernimmt: die Feinjustierung der Rotorpositionen zueinander, die elastische Dämpfung betriebsbedingter Schwingungen sowie eine steuerbare Trennung der Verbindung zur Ermöglichung des Absenkvorgangs. Der Absenkvorgang erfolgt durch kontrolliertes Schwenken der Rotor-Tragarme um die horizontale Drehachse, wobei eine oder mehrere Seilwinden zum kontrollierten Halten und Heben eingesetzt werden.

Die modulare Ausführung der Tragstruktur erlaubt unterschiedliche Geometrien und Materialausführungen, angepasst an die verwendeten Rotoren und jeweiligen Standortbedingungen. Damit lässt sich die Anlage materialeffizient, montagefreundlich und dynamisch stabil realisieren. Die Erfindung ist insbesondere für kleinere bis mittelgroße Windenergieanlagen geeignet, die auch auf vorhandene Strukturen wie Gebäude- oder Containerdächern montiert werden können.

Die Erfindung wird nachstehend anhand von Ausführungsbeispielen in Verbindung mit der Zeichnung näher beschrieben. Es zeigen:
Abbildung 1 zeigt eine Seitenansicht der Windenergieanlage mit x-förmiger Tragstruktur und zentralem Drehgelenk.

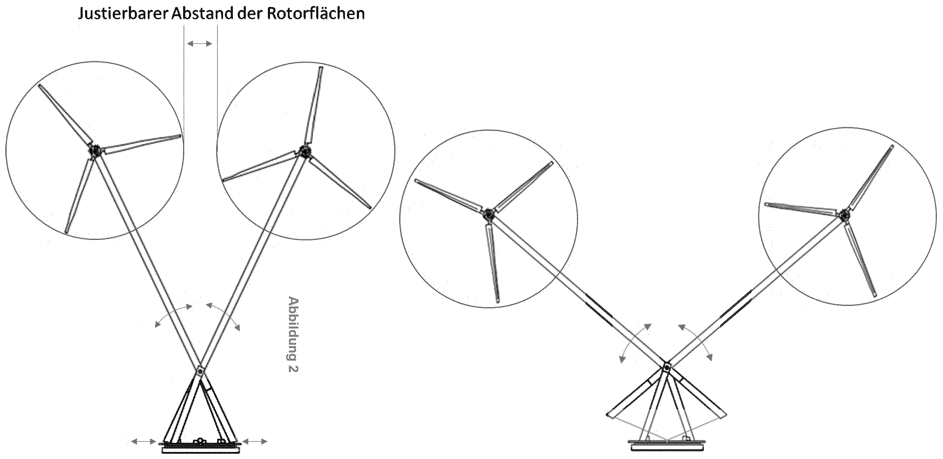

Abbildung 2 stellt eine schematische Darstellung der Feinjustierung des Rotorabstands durch das elastische Verbindungssystem dar.
Abbildung 3 illustriert den Schwenkvorgang der Rotor-Tragarme beim Absenken.
Abbildung 4 zeigt eine Variante mit außenliegenden Rotor-Tragarmen zur Stützkonstruktion.
Abbildung 5 verdeutlicht eine zentrale Stützkonstruktion für die Lagerung der Drehachse.
Abbildung 6 zeigt eine ineinandergreifende Struktur für ummantelte Rotoren sowie den Aufbau auf einem Containerdach.
Abbildung 7 stellt eine Mehrfachbelegung der Tragarme mit mehreren Horizontalachs-Rotoren dar.
Abbildungen 8 und 9 zeigen Varianten mit Vertikalachs-Rotoren.

### Beschreibung

Erfindungsgemäß wird diese Aufgabe durch ein aufgelöste Tragstruktur für Multi-Rotoren WEA gemäß den Merkmalen der beigefügten Patentansprüche gelöst. Die nachfolgend beschriebenen Lösungen sind insbesondere für kleine bis mittelgroße Windenergieanlagen geeignet, beispielsweise mit einer Gesamtnennleistung unter 200 kW und/oder einer Turmhöhe unter 50 Metern. Für größere Anlagen kann die mechanische Beanspruchung sowie die Komplexität der Schwenk- und Dämpfungsmechanik die Umsetzbarkeit technisch einschränken. Anlagen in der vorgesehenen Größenordnung können z.B. auch auf vorhandene Gebäude oder andere Strukturen, wie z.B. Container errichtet und betrieben werden.

Gemäß der Erfindung trägt die aufgelöste Tragstruktur mindestens zwei baugleiche Rotoren (der Begriff Rotor wird hier für das System bezeichnet, das die Komponenten einer WEA umfaßt, die zur Umwandlung der Windenergie z.B. in elektrische Energie benötigt werden und typischerweise auf dem Turm angeordnet sind, z.B. Rotorblätter, Getriebe, Generator, Gondel, etc.). Diese können mit einer horizontalen oder vertikalen Rotor-Drehachse ausgestattet sein. Bei Rotoren mit horizontaler Achse sind diese annähernd parallel zueinander ausgerichtet.

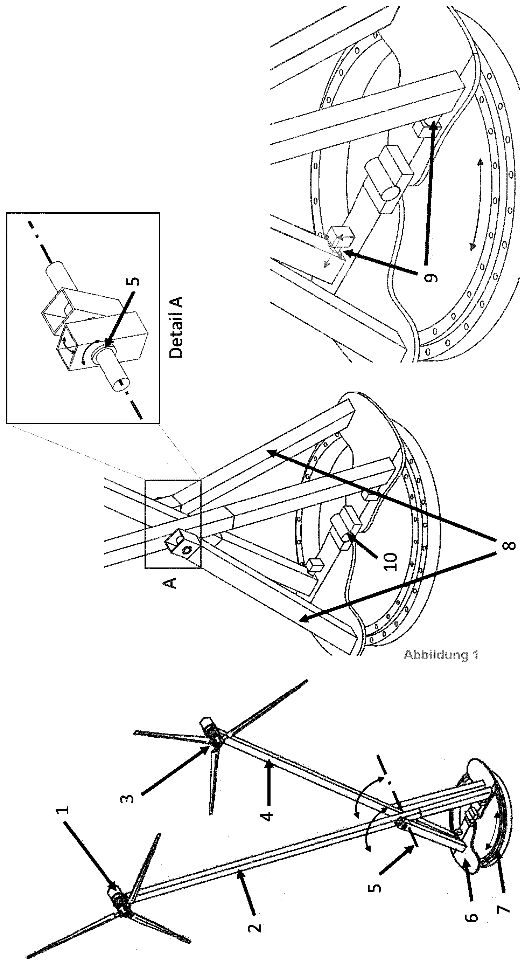

Die Rotoren (1) und (3) sind an den Enden zweier gleich langer, sich kreuzender Rotor-Tragarme (2) und (4) befestigt, welche zusammen eine X-förmige Anordnung bilden. Diese Rotor-Tragarme sind im Schnittpunkt über ein Drehgelenk gelagert (5), dass ein Schwenken der Rotor-Tragarme mit den Rotoren an dessen Enden um eine im Wesentlichen horizontale Achse sowie geringe Neigungsbewegungen quer zur Drehebene erlaubt. Die Drehachse ist über eine separate Stützkonstruktion (8) abgestützt, die fest mit einer Basisstruktur (6) verbunden ist, die wiederum mit dem drehbaren Teil einer Drehverbindung (7) zur Windrichtungsnachführung verbunden ist. (Abbildung 1).

Die Elemente (2),(4) und (8) der Tragstruktur (Abbildung 1) bestehen vorzugsweise aus mehreren stabförmigen Bauteilen, die sich zu einer X-förmigen Rahmenstruktur verbinden. Dabei kann die Position der Rotor-Tragarme zu der Stützkonstruktion variieren (Tragarme innerhalb oder außerhalb der Stützkonstruktion). Sie können als Gitterkonstruktion, als geschweißte Rohrstruktur, einzelne Stützsäulen mit Aussteifungselementen oder als Verbundträger mit veränderlichem Querschnitt entlang der Längsachse oder als Kombinationen daraus ausgeführt sein. Geeignete Materialien sind z. B. Stahl, Aluminium oder Faserverbundstoffe.

Erfindungsgemäß ist zwischen den freien Enden der Rotor-Tragarme (2,4) und der Basisstruktur (6) jeweils ein elastisches Verbindungssystem (9) vorgesehen, das mehrere technische Funktionen in einem Bauteil oder einer funktional gekoppelten Baugruppe integriert. Dieses Verbindungssystem erfüllt folgende Funktionen:

### 1. Feinpositionierung der Rotor-Tragarme

Das Verbindungselement ermöglicht die präzise Justierung der Neigung der Rotor-Tragarme und damit des Abstands zwischen den Rotorflächen, insbesondere zur Einstellung einer gewünschten aerodynamischen Interaktion der Strömung durch die Rotoren, die zu einer Leistungssteigerung führt.

### (Abbildung 2)

Mögliche Umsetzungsvarianten:
- Spindelmechanismus mit Kontermutter
- Exzenterverstellung mit Arretierung
- Hydraulisch oder pneumatisch steuerbare Druckkammer
- Stellmotor mit Gewindetrieb

### 2. Regelbare elastische Eigenschaften zur Schwingungsdämpfung

Das Verbindungssystem besitzt elastische Eigenschaften, um Betriebsschwingungen (z. B. Rotorresonanzen, Turmbewegungen) gezielt zu dämpfen und Strukturschäden zu vermeiden. Die Steifigkeit kann konstant oder regelbar ausgeführt sein.

Mögliche Umsetzungsvarianten:
- Schraubenfeder (linear oder progressiv)
- Elastomer-Element mit definiertem Modul
- Kombiniertes Feder-Dämpfer-System (z. B. hydraulisch)
- Piezoaktive oder magnetorheologische Dämpfung (regelbar)
- Vorgespanntes Reibsystem zur Energiedissipation

### 3. Gesteuertes Lösen der Verbindung zur Freigabe für Schwenkbewegung

Das elastische Verbindungssystem kann aktiv oder passiv gelöst werden, um das Absinken der Rotor-Tragarme durch Schwenken zu ermöglichen.

Mögliche Umsetzungsvarianten:
- Mechanisches Verriegelungssystem mit Auslösebolzen (ferngesteuert oder elektrisch)
- Elektromagnetisch betätigte Kupplungseinheit
- Pneumatisch oder hydraulisch entriegelbarer Blockmechanismus
- thermisch aktivierbare Formgedächtniselemente (für Überlastfälle)

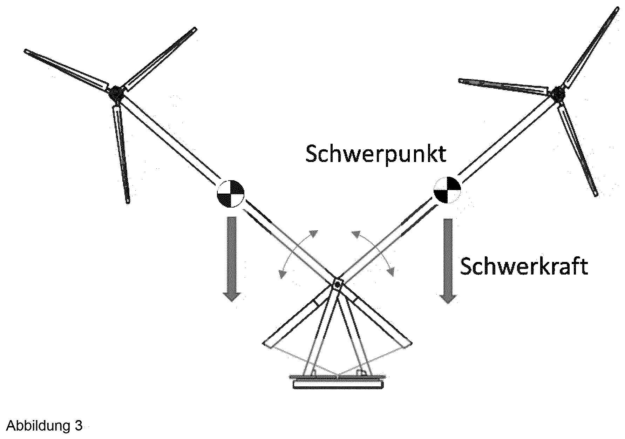

Über eine auf der Basisstruktur befestigte, vorzugsweise fest installierte Seilwinde (11) dessen Seilenden mit den freien Enden der Rotor-Tragarmen verbunden sind, können die Rotoren an den Rotor-Tragarme kontrolliert abgesenkt und nach Abschluss von Wartungs- oder Schutzmaßnahmen wieder angehoben und durch das Verbindungssystem (9) verriegelt werden. Der Absenk- und Aufrichtvorgang erfolgt dabei vorzugsweise synchron, um mögliche Kippmomente auf die Tragstruktur und die Drehlagerung während dieser Vorgänge zu minimieren. Dies wird z.B. durch Wahl einer Winde mit doppelter Seilwicklung sichergestellt. Durch eine erfindungsgemäße Auslegung der Geometrie für die Spreizung der X-Form (gebildet aus den Winkeln der Rotor-Tragarme zur Vertikalen), der Höhenlage des Schnittpunktes (Drehachse) über der Basisstruktur sowie die Lage des Schwerpunktes aus Rotor-Tragarm und Rotor oberhalb der Drehachse entsteht beim Lösen der Verbindung am Fuß des Rotor-Tragarmes eine selbstständige Drehbewegung des Rotor-Tragarmes, so dass der Rotor am Ende des Tragarmes in Richtung Boden abgesenkt wird (Abbildung 3). Für den Absenkvorgang ist daher nur eine geringe Energie nötig, um die Verriegelung am Rotor-Tragelement zu lösen, um die Absenkgeschwindigkeit mittels einer Bremse an Seilwinde zu kontrollieren und bei Erreichen einer Endposition den Absenkvorgang mittels der der Bremsfunktion der Seilwinde zu stoppen. Durch das Vorhalten der hierfür benötigten Energie kann ein Absenkvorgang auch bei einer Notsituation (z.b. Extremwind-Ereignisse mit gleichzeitigem Stromausfall) automatisch oder autark aus der Ferne ausgelöst werden.

Die Ausführung der zentralen Drehlagerung (7) zur Windrichtungsnachführung der gesamten Anlage unterhalb der Basisstruktur kann je nach Anlagengröße variieren:
- Für kleine bis mittelgroße WEA (vorzugsweise < 20 kW) kann es als kompakte Kugeldrehverbindung, als mehrreihiges Rillenkugellager (wie in Abbildung 1 angedeutet), ausgeführt werden. Diese können Kräfte und Momente mit geringer Reibung aus dem drehenden Teil auf den feststehenden Untergrund übertragen.
- Für größere WEA ist eine aufgelöste Schienen- und Rollenkonstruktion (nicht dargestellt) vorteilhaft, bei der die Tragelemente über Rollen auf einem ringförmigen Schienenelement geführt werden. Die Rollen sind dabei so angeordnet, dass die Lasten und Momente aus dem Betrieb der Anlage sicher über die Schiene auf den Untergrund abgeleitet werden können, die Anlage nicht von Schiene abhebt und gleichzeitig eine reibungsarme Drehbewegung um die vertikale Achse ermöglichen.

Die Drehbewegung zur Windrichtungsnachführung wird durch Motoren über form- oder kraftschlüssige Verbindung zum drehbaren Teil der Drehlagerung erreicht.

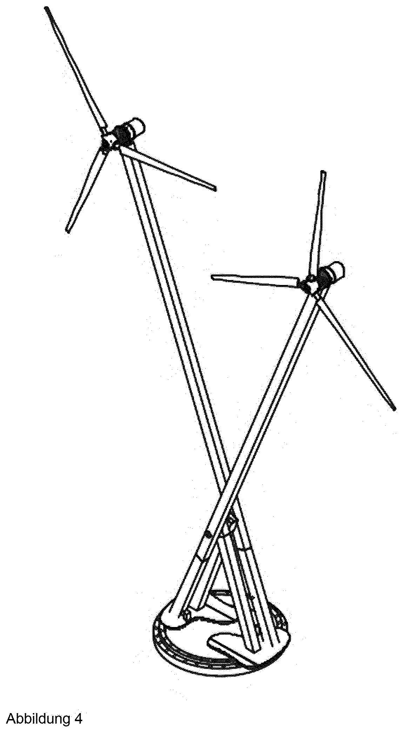

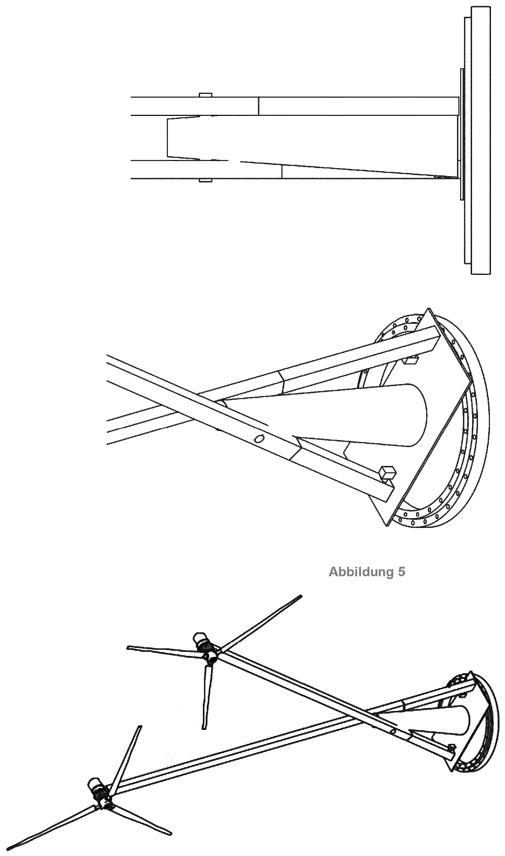

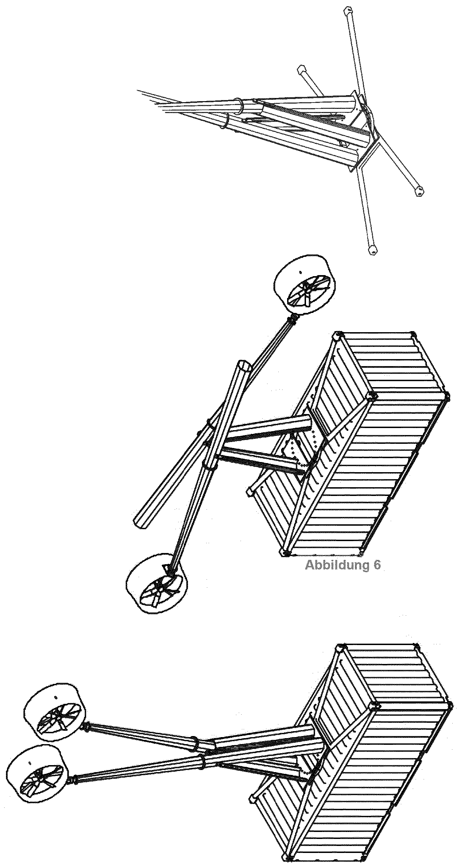

In den Abbildungen 4-9 sind Varianten der aufgelösten Tragstruktur in Verbindung mit unterschiedlichen Rotoren dargestellt. So kann die Anordnung der Rotor-Tragarme zu den Tragelementen der Drehachse variieren. Diese können innenliegend zwischen den Tragelementen für die Drehachse angeordnet sein (Abbildung 1) oder außerhalb (Abbildung 4). Die Aufgabe zur Lagerung der Drehachse kann auch über ein zentral angeordnete Stützstruktur erfolgen (Abbildung 5). In Abbildung 6 ist eine Variante dargestellt, bei der die Rotor-Tragarme und die Tragelemente der Drehachse ineinandergreifen. Weiterhin zeigt die Abbildung die Verwendung von Mantelturbinen sowie die Montage der gesamten Anlage auf einem Containerdach. Die Verteilung der Lasten aus dem Betrieb der Anlage über die aufgelöste Tragstruktur auf eine breite Basis begünstigt die Montage auf Dächern oder, wie in der Abbildung dargestellt, auf einem Containerdach. Durch eine Ballastierung des Containers kann in einfacher Weise ein Schwerlastfundament für die Anlage erzeugt werden.

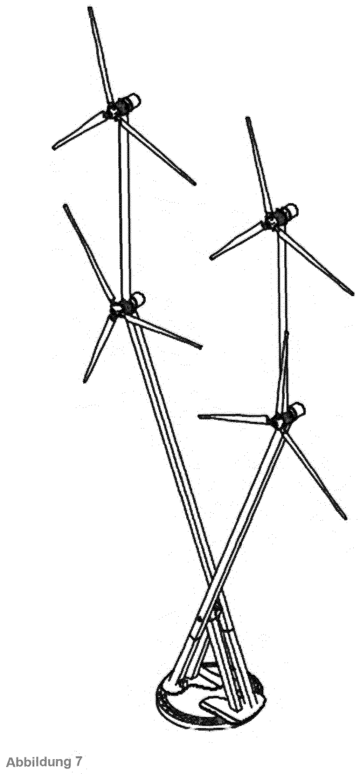

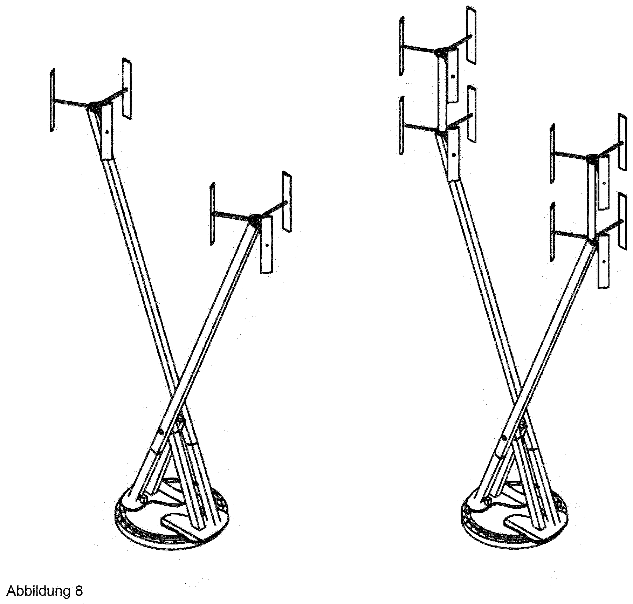

An den Rotor-Tragarmen können bei entsprechender Dimensionierung auch mehrere baugleiche Rotoren angebracht werden. Dies ist in der Abbildung 7 für den Fall von jeweils 2 Horizontalachs-Rotoren pro Tragarm und in Abbildung 8 und 9 werden Varianten dargestellt, bei denen Vertikalachs-Rotoren verwendet werden.

Die vorliegende Erfindung wurde anhand von Ausführungsbeispielen und Abwandlungen unter Bezugnahme auf die Abbildungen näher beschrieben. Gemeinsam ist immer das die Rotor-Tragarme schwenkbar auf einer Drehachse x-förmig angeordnet sind und diese Drehachse, die aber nicht mittig in den Rotor-Tragarmen positioniert sein muß, mit weiteren Tragelementen gestützt wird. Ziel ist immer, die Lasten aus dem Betrieb der Anlage geometrisch über eine breite Basis zum Boden hin abzuleiten. In Verbindung mit dem positiven Einfluß der erfindungsgemäßen Verwendung, insbesondere von aktiven elastischen Elementen auf ein stabiles dynamisches Analgenverhalten kann die aufgelöste Tragstruktur materialschonend und leicht, und damit kostengünstig gegenüber herkömmlichen Ausführungen gestaltet werden. Es ist für den auf diesem Gebiet tätigen Fachmann selbstverständlich, dass die Ausgestaltung der vorliegenden Erfindung gemäß den vorstehend beschriebenen Abbildungen und die für die jeweiligen Bauteile und Komponenten verwendeten Bezugszeichen in den Abbildungen und der Beschreibung sowie die beispielhaften Angaben nicht einschränkend auszulegen sind. Die Erfindung ist auf die angegebenen Darstellungen in den Abbildungen und insbesondere auf Dimensionen und Anordnungen nicht beschränkt. Als zur Erfindung gehörig werden sämtliche Ausführungsformen und Varianten gesehen, die unter die beigefügten Patentansprüche fallen.

## Patentansprüche

1. Windenergieanlage mit einer Tragstruktur, an der mindestens zwei Rotor-Tragarme um eine im Wesentlichen horizontale Achse schwenkbar gelagert sind, wobei:
die Tragstruktur x-förmig ausgebildet ist und aus zwei sich kreuzenden Rotor-Tragarmelementen besteht an dessen jeweiligen Ende die Rotoren befestigt sind,
die Rotor-Tragarme an ihrem Kreuzungspunkt über ein horizontales Drehgelenk verbunden sind,
die Drehachse des Drehgelenks über eine Stützkonstruktion gehalten ist, die fest mit einer drehbaren Basisstruktur verbunden ist,
und ein elastisches Verbindungssystem zwischen Auslegern der Rotor-Tragarme und der Basisstruktur angeordnet ist, das:
(a) die Feinjustierung der Rotorpositionen zueinander erlaubt,
(b) elastische Eigenschaften zur Schwingungsdämpfung aufweist,
(c) eine gesteuerte Trennung zur Freigabe der Schwenkbewegung ermöglicht.

2. Windenergieanlage nach Anspruch 1,
**dadurch gekennzeichnet,**
**dass** die Stützkonstruktion der Drehachse als geschweißter Rohrrahmen, Gitterträger oder einzeln abgestützte Säulenstruktur mit Aussteifungen ausgebildet ist.

3. Windenergieanlage nach einem der vorhergehenden Ansprüche,
**dadurch gekennzeichnet,**
**dass** das elastische Verbindungssystem aus einer Kombination von mechanischer Justiereinheit, elastischem Dämpfungselement und fernauslösbarem Verriegelungssystem besteht.

4. Windenergieanlage nach Anspruch 3,
**dadurch gekennzeichnet,**
**dass** die elastischen Eigenschaften des Verbindungssystems aktiv regelbar sind.

5. Windenergieanlage nach Anspruch 3,
**dadurch gekennzeichnet,**
**dass** die Trennung der Verbindung über ein elektrisch, hydraulisch oder pneumatisch betätigbares Verriegelungssystem erfolgt.

6. Windenergieanlage nach einem der vorhergehenden Ansprüche,
**dadurch gekennzeichnet,**
**dass** die geometrische Gestaltung der Rotor-Tragarme sowie die Position der Drehachse dergestalt erfolgt, dass die Rotoren mit den Rotor-Tragarmen sich automatisch absenken, sobald die Verriegelungssysteme geöffnet sind.

7. Windenergieanlage nach einem der vorhergehenden Ansprüche,
**dadurch gekennzeichnet,**
**dass** das elastische Verbindungssystem durch ein Steuerkommando der Anlagenregelung aktiv gelöst werden kann, um das eigenständige Absenken der Tragarme durch Schwenken zu ermöglichen.

8. Windenergieanlage nach einem der vorhergehenden Ansprüche,
**dadurch gekennzeichnet,**
**dass** mindestens eine Seilwinde an der Basisstruktur vorgesehen ist, deren Seile an den freien Auslegerenden befestigt sind und das kontrollierte, synchrone Absenken der Rotor-Tragarme unterstützt und die Rotor-Tragarme synchron anhebt.

## Geänderte Patentansprüche

### Geänderte Patentansprüche gemäss Regel 137(2) EPÜ.

1. **Windenergieanlage** mit einer Tragstruktur (2, 4, 8), an der mindestens zwei Rotor-Tragarme (2, 4) um eine im Wesentlichen horizontale Achse schwenkbar gelagert sind, wobei
- die Tragstruktur x-förmig ausgebildet ist und aus zwei sich kreuzenden Rotor-Tragarmelementen (2, 4) besteht, an deren jeweiligen Enden Rotoren (1, 3) befestigt sind,
- die Rotor-Tragarme (2, 4) an ihrem Kreuzungspunkt über ein Drehgelenk (5) verbunden sind, das ein Schwenken der Rotor-Tragarme (2, 4) um eine im Wesentlichen horizontale Achse sowie geringfügige Neigungsbewegungen quer zur Drehebene erlaubt,
- die Drehachse des Drehgelenks (5) über eine Stützkonstruktion (8) gehalten ist, die fest mit einer um eine vertikale Achse drehbaren Basisstruktur (6) verbunden ist,
und zwischen Auslegern der Rotor-Tragarme (2, 4) und der Basisstruktur (6) jeweils ein elastisches Verbindungssystem (9) angeordnet ist,
**dadurch gekennzeichnet, dass**
jedes elastische Verbindungssystem (9) als Baugruppe ausgebildet ist, die
- eine mechanische Justiereinrichtung zur Feinpositionierung der Rotorpositionen (1) und (3) zueinander,
- mindestens ein Dämpfungselement zur elastischen Aufnahme und Dämpfung von Betriebs- und Turmschwingungen und
- ein fernauslösbares Verriegelungssystem umfasst, welches in einem verriegelten Zustand die Rotor-Tragarme (2, 4) in einer Betriebsstellung hält und in einem gelösten Zustand eine Schwenkbewegung der Rotor-Tragarme (2, 4) in eine abgesenkte Stellung freigibt,
wobei das Dämpfungselement und das Verriegelungssystem jeweils in der Kraftübertragungsstrecke zwischen dem jeweiligen Rotor-Tragarm (2, 4) und der Basisstruktur (6) angeordnet sind,
wobei das Dämpfungselement insbesondere als Schraubenfeder, Elastomer-Element, FederDämpfer-System oder piezoaktives bzw. magnetorheologisches Dämpfungselement ausgebildet sein kann und das Verriegelungssystem insbesondere ein mechanisches Verriegelungssystem mit Auslösebolzen, eine elektromagnetisch betätigte Kupplungseinheit oder einen pneumatisch oder hydraulisch entriegelbaren Blockmechanismus umfasst.

2. Windenergieanlage nach Anspruch 1,
**dadurch gekennzeichnet,**
**dass** die Stützkonstruktion (8) der Drehachse als geschweißter Rohrrahmen, Gitterträger oder einzeln abgestützte Säulenstruktur mit Aussteifungen ausgebildet ist.

3. Windenergieanlage nach Anspruch 1 oder 2,
**dadurch gekennzeichnet,**
**dass** die elastischen Eigenschaften des Dämpfungselements des elastischen Verbindungssystems (9) aktiv regelbar sind.

4. Windenergieanlage nach einem der vorhergehenden Ansprüche,
**dadurch gekennzeichnet,**
**dass** das fernauslösbare Verriegelungssystem elektrisch, hydraulisch oder pneumatisch betätigbar ist.

5. Windenergieanlage nach einem der vorhergehenden Ansprüche,
**dadurch gekennzeichnet,**
**dass** die geometrische Gestaltung der Rotor-Tragarme (2, 4) sowie die Positionierung der Drehachse (5) so gewählt sind, dass sich die Rotor-Tragarme (2, 4) mit den daran befestigten Rotoren (1) und (3) unter ihrem Eigengewicht automatisch absenken, sobald das Verriegelungssystem gelöst ist.

6. Windenergieanlage nach einem der vorhergehenden Ansprüche,
**dadurch gekennzeichnet,**
**dass** das fernauslösbare Verriegelungssystem durch ein Steuerkommando in Abhängigkeit von Betriebsgrößen der Windenergieanlage, insbesondere Windgeschwindigkeit, Schwingungszustand oder Fehlerzustand, lösbar ist, um ein selbsttätiges Absenken der Rotor-Tragarme (2, 4) zu ermöglichen.

7. Windenergieanlage nach einem der vorhergehenden Ansprüche,
**dadurch gekennzeichnet,**
**dass** mindestens eine Seilwinde (11) an der Basisstruktur (6) vorgesehen ist, deren Seilführung so ausgelegt ist, dass die Seilwinde das Absenken und insbesondere den synchronen Hub der Rotor-Tragarme (2, 4) unterstützt.

8. Windenergieanlage nach einem der vorhergehenden Ansprüche,
**dadurch gekennzeichnet,**
**dass** die Basisstruktur (6) auf einem Containerdach oder einem Gebäudedach angeordnet ist und dass die Rotoren (1, 3) als ummantelte Rotoren ausgebildet sind, die eine ineinandergreifende Struktur bilden.

9. Windenergieanlage nach einem der Ansprüche 1 bis 8,
**dadurch gekennzeichnet,**
**dass** die Rotor-Tragarme (2, 4) außerhalb von Tragelementen der Stützkonstruktion (8) angeordnet sind.

10. Windenergieanlage nach einem der Ansprüche 1 bis 8,
**dadurch gekennzeichnet,**
**dass** die Rotor-Tragarme (2, 4) innenliegend zwischen Tragelementen der Stützkonstruktion (8) angeordnet sind.

11. Windenergieanlage nach einem der vorhergehenden Ansprüche,
**dadurch gekennzeichnet,**
**dass** die Stützkonstruktion (8) im Wesentlichen zentral unterhalb des Drehgelenks (5) angeordnet ist.

12. Windenergieanlage nach einem der vorhergehenden Ansprüche,
**dadurch gekennzeichnet,**
**dass** an jedem Rotor-Tragarm (2, 4) mehrere Rotoren (1, 3) angeordnet sind.

13. Windenergieanlage nach einem der vorhergehenden Ansprüche,
**dadurch gekennzeichnet,**
**dass** die Rotoren (1, 3) als Vertikalachs-Rotoren ausgebildet sind.

14. Windenergieanlage nach einem der vorhergehenden Ansprüche,
**dadurch gekennzeichnet,**
**dass** die mechanische Justiereinrichtung des elastischen Verbindungssystems (9) so ausgebildet ist, dass durch Verstellen der Neigung der Rotor-Tragarme (2, 4) der seitliche Abstand zwischen den von den Rotoren (1, 3) überstrichenen Rotorflächen veränderbar ist, um eine gewünschte aerodynamische Interaktion der Strömung zwischen mehreren Rotoren zur Leistungsoptimierung der Windenergieanlage einzustellen.

15. Windenergieanlage nach Anspruch 14,
**dadurch gekennzeichnet,**
**dass** die Justierung des seitlichen Abstands genutzt wird, um die Strömungsverhältnisse und die aerodynamische Interaktion der Rotoren an die jeweiligen Standortbedingungen und an die verwendete Rotor-Konfiguration anzupassen.
